# EUROPEAN PATENT SPECIFICATION

(11) **EP 4 009 005 B1**
(45) Date of publication and mention of the grant of the patent: **21.10.2026**
(21) Application number: 21202898.9
(22) Date of filing: 01.03.2013
(51) Int. Cl.: G01D 5/20, G01F 1/075, G01F 1/115, G01F 15/06

(54) **ROTATIONAL POSITION SENSING**
DREHPOSITIONSERFASSUNG
DÉTECTION DE POSITION DE ROTATION

(30) Priority: 01.03.2012 GB 201203685
(43) Date of publication of application: 08.06.2022
(62) Document number(s) of the earlier application(s) in accordance with Art. 76 EPC: 13708894.4 / 2 820 383
(73) Proprietor: Elster Water Metering Limited, Birmingham B4 6AT (GB)
(72) Inventor: POOLEY, David Martin, Cambridge CB22 5EB (GB)
(74) Representative: Houghton, Mark Phillip

(56) References cited:
- WO-A1-2006/043078
- WO-A1-2011/128698
- DE-A1- 4 137 695
- US-A1- 2004 012 384
- "SLIM, LIGHTWEIGHT ENCODER IS FLEXIBLE AND LOW COST", EUREKA, FINDLAY PUBLICATIONS LTD., DARTFORD, GB, vol. 25, no. 4, April 2005 (2005-04-01), pages 20/21, XP001226542, ISSN: 0261-2097

## Description

The present invention relates to a rotational position sensing arrangement for sensing the rotational position of a rotatable member, to a fluid flow meter kit incorporating such an arrangement, to a rotatable member, and to a resonant pointer. The invention has particular use in the field of water metering.

Examples of currently used systems can be found in the following documents:
DE4137695A1, which discloses a system comprising two sensors adjacent to the rotor. Each sensor contains a resonant circuit damped differently by two sectors of the rotor with different magnetic properties. The rate of decay of oscillations caused by pulsed stimulation depends on the magnetic properties of the sector next to the sensor and is evaluated to determine the motion state. An evaluation circuit compares the numbers of oscillations in successive evaluation cycles until the oscillation has decayed below a threshold and produces a signal corresponding to the sign of the difference. The motion state signal is derived from these signals by a logic circuit. Thereby, a reliable sensor signal evaluation is achieved with low-cost circuit insensitive to external influences.

"SLIM, LIGHTWEIGHT ENCODER IS FLEXIBLE AND LOW COST", EUREKA, FINDLAY PUBLICATIONS LTD., DARTFORD, GB, vol. 25, no. 4, April 2005, page 20/21, which discloses a positioning sensor that uses a printed circuit boards (PCBs) and a resonant 'target' made from an inductor and capacitor in series, The target is attached to the obiect whose position is to be measured. A (normally) stationary 'antenna' is supplied with an AC signal to produce a low power AC-electromagnetic field. As the target enters the antenna's field, currents are induced to flow in the target, which, in turn, produce their own electromagnetic field. The interaction of the two fields is sensed by the antenna so that the identity and position of the target can be determined.

According to the present invention, there is provided a rotational position sensing arrangement for sensing the rotational position of a rotatable member, the arrangement including at least one excitation circuit, the or each excitation circuit having a section which includes an excitation coil, the excitation circuit being operable to energise the section, the energy causing current to flow in the section when the section is not driven, thereby exciting an oscillating electromagnetic field; and means for coupling to the electromagnetic field thereby damping the oscillations of the electromagnetic field; the one or more excitation circuits or the coupling means being associated with the rotatable member. By providing such a coupling means damping can be improved.

For ease of manufacture, the coupling means comprises a coupling circuit which includes a coupling coil. The coupling circuit includes a capacitor, the coupling coil surrounding the capacitor.

For improved damping, the electromagnetic field excitable by each excitation circuit oscillates at a predetermined frequency, which causes the coupling circuit to resonate when coupled to the electromagnetic field.

For ease of measurement, the arrangement includes means for detecting the value of at least one parameter of the oscillations associated with each of one or more excitations in each of one or more of the excitation coils. The arrangement further includes processing means for determining the rotational position of the rotatable member at a particular time from the or each parameter value. The parameter is the number of oscillations for which the amplitude exceeds a predetermined threshold value. The processing means may be operable to determine the speed of the rotatable member.

For improved functionality, the arrangement may include at least two excitation circuits, wherein the processing means is operable to determine the direction of rotation of the rotatable member.

The processing means is operable to determine at least one characteristic of an actuating force acting on the rotatable member, and the actuating force is preferably the flow of fluid, with the processing means preferably being operable to determine the rate of fluid flow; the processing means may be operable to determine the volume of fluid flow.

For ease of manufacture, the rotatable member includes a plate element having the coupling circuit mounted thereon.

The plate element is in the form of a double sided printed circuit board and the coupling coil is formed by the tracks of the double sided printed circuit board.

The capacitor is mounted on a central portion of the printed circuit board in electrical connection with the tracks, the tracks being mounted on corresponding portions of the major sides of the printed circuit board in an arrangement wherein they surround the capacitor.

In a further embodiment, not according to the claims, for versatility the rotatable member includes a cylinder which is substantially co-axial with the axis of rotation of the rotatable member and wherein the coupling coil is attached along a portion of the outer surface of the cylinder. Each excitation coil may be fixed such that it is radially disposed relative to the axis of rotation of the rotatable member, the centre of the excitation coil being substantially in register with the centre of the coupling coil once during a full rotation of the rotatable member.

Advantageously, a quality factor of the coupling means is preferably greater than 0.5, more preferably between 1 and 3.

The resonance frequencies of the excitation means and of the coupling means preferably range between 100kHz and 1MHz, more preferably between 250KHz and 350KHz.

The inductance of the coupling means preferably ranges between 0.1 micro Henrys and 2 micro Henrys, more preferably between 0.4 micro Henrys *and* 0.7 micro Henrys.

The capacitance of the coupling means preferably ranges between 100nF and 2000nF, more preferably between 500nF and 1400nF.

The tracks are preferably between 0.2mm and 0.4mm, more preferably 0.3 mm wide, with between 0.1mm and 0.3 mm, preferably 0.2 mm gaps.

Preferably, 2oz copper is used for tracks, the copper being between 50µm and 100µm, preferably 70µm thick.

In another aspect, which is not claimed, the present invention provides a fluid flow meter kit including a fluid flow meter which includes a rotatable member, coupling means and attachment means; and a fluid flow meter peripheral device including excitation means and attachment means corresponding to the attachment means of the fluid flow meter for removably attaching the fluid flow meter peripheral device to the fluid flow meter; the arrangement of the rotatable member, coupling means and excitation means when the fluid flow meter peripheral device is attached to the fluid flow meter by the attachment means being according to the rotational position sensing arrangement as aforesaid. By providing such a peripheral device, remote measurement and ease of maintenance and calibration can be facilitated.

Preferably, the fluid flow meter peripheral device includes detection means and processing means, the arrangement of the rotatable member, coupling means, excitation means, detection means and processing means when the fluid flow meter peripheral device is attached to the fluid flow meter by the attachment means being according to the arrangement as aforesaid.

The invention extends to a rotatable member**,** which is not claimed separately, including a capacitor and a plate element in the form of a double sided printed circuit board of which the tracks form a coupling coil.

The invention further extends to a rotatable member including a capacitor and a plate element in the form of a printed circuit board of which the tracks form a coupling coil, the tracks surrounding the capacitor.

A quality factor of the coupling means is preferably greater than 0.5, more preferably between 1 and 3.

The resonance frequencies of the excitation means and of the coupling means preferably range between 100kHz and 1MHz, more preferably between 250KHz and 350KHz.

The inductance of the coupling means preferably ranges between 0.1 micro Henrys and 2 micro Henrys, more preferably between 0.4 micro Henrys and 0.7 micro Henrys.

The capacitance of the coupling means preferably ranges between 100nF and 2000nF, more preferably between 500nF and 1400nF.

The tracks are preferably between 0.2mm and 0.4mm, more preferably 0.3 mm wide, with between 0.1mm and 0.3 mm, preferably 0.2 mm gaps.

Preferably, 2oz copper is used for tracks, the copper being between 50µm and 100µm, preferably 70µm thick.

The rotatable member preferably includes a pointer.

The present invention will now be described, purely by way of example, with reference to the accompanying diagrammatic drawings, in which:
Figure 1 shows a schematic view of three excitation coils, a rotatable member and a coupling circuit of a rotational position sensing arrangement in accordance with the invention;
Figure 2a shows top and bottom views of a double sided printed circuit board and a capacitor mounted on the double sided printed circuit board of the rotational position sensing arrangement of Figure 1;
Figure 2b shows top and bottom views of another example of a double sided printed circuit board and a capacitor mounted on the double sided printed circuit board of the rotational position sensing arrangement of Figure 1;
Figure 3 shows a schematic view of an excitation circuit, a comparator and a microcontroller of the arrangement of Figure 1;
Figure 4 shows a schematic view of an excitation circuit and a coupling circuit of the arrangement of Figure 1;
Figures 5a and 5b show a schematic view of an excitation coil and a coupling circuit of the rotational position sensing arrangement of Figure 1 together with the voltage observed over the excitation coil and at the output of a comparator of the arrangement;
Figure 6 shows a perspective view of a fluid flow meter which includes the rotatable member and the coupling circuit of the rotational position sensing arrangement of Figure 1;
Figure 7 shows a perspective view of a fluid flow meter peripheral device attached to the fluid flow meter of Figure 6, the fluid flow meter peripheral device including the excitation circuits and microcontroller of the arrangement of Figure 1;
Figure 8 shows a sectional perspective view of the fluid flow meter and the fluid flow meter peripheral device of Figure 7;
Figures 9a and 9b show perspective views of the rotatable member and coupling circuit of the fluid flow meter of Figure 6;
Figure 10 shows a perspective view of a fluid flow meter which includes the rotational position sensing arrangement of Figure 1;
Figure 11 shows a sectional perspective view of the fluid flow meter of Figure 10;
Figures 12a and 12b show perspective views of the rotatable member and coupling circuit of the fluid flow meter of Figure 10;
Figure 13 shows a sectional perspective view of a fluid flow meter including a rotational position sensing arrangement not according to the claims;
Figure 14 shows a perspective view of a part of the fluid flow meter of Figure 13;
Figure 15 shows a perspective view of the excitation coils and the coupling coil of the fluid flow meter of Figure 13;
Figure 16 shows a perspective view of the rotatable member and the coupling coil of the fluid flow meter of Figure 13;
Figure 17 shows a detail perspective view of the rotatable member and the coupling coil of the fluid flow meter of Figure 13;
Figure 18 shows a perspective view of a fluid flow meter which includes the rotational position sensing arrangement of Figure 1;
Figure 19 shows a sectional perspective view of the fluid flow meter of Figure 18; and
Figures 20a and 20b show perspective views of the rotatable member and coupling circuit of the fluid flow meter of Figure 18.

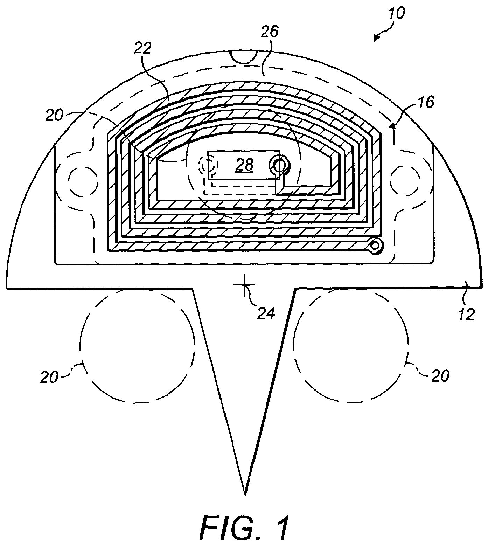

With reference to Figures 1 to 4 of the drawings, a rotational position sensing arrangement is designated, generally, by the reference numeral 10. The rotational position sensing arrangement is for sensing the rotational position of a rotatable member 12.

The arrangement 10 includes, broadly, three excitation circuits 14, coupling means in the form of a coupling circuit 16, detection means in the form of a comparator 18 associated with each excitation circuit and processing means in the form of a microcontroller 19.

Each excitation circuit 14 includes an excitation coil 20. The coupling circuit 16 includes a coupling coil 22. The three excitation coils 20 are each in a fixed position relative to the axis of rotation 24 of the rotatable member 12. The three excitation coils 20 are further in an arrangement wherein each of the excitation coils is substantially in register with the coupling coil 22 at a different rotational position of the rotatable member.

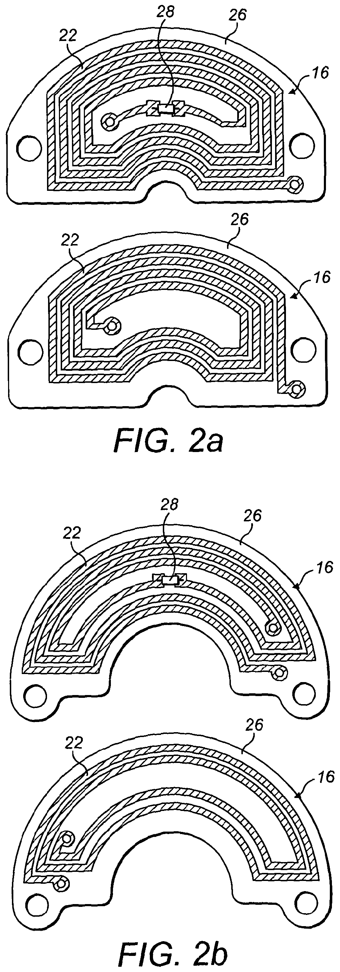

With reference to Figures 2a and 2b of the drawings, the rotatable member 12 includes a plate element in the form of a double sided printed circuit board 26. The coupling circuit 16 includes a capacitor 28 which is connected with the coupling coil 22 in a closed circuit. The coupling coil is formed by the tracks of the printed circuit board. The capacitor is mounted on a central portion of the printed circuit board in electrical connection with the tracks of the printed circuit board. The tracks of the printed circuit board are mounted on corresponding portions of the major sides of the printed circuit board in an arrangement wherein they surround the capacitor and extend towards the edges of the printed circuit board. Alternatively, the capacitor can be mounted, whether on or off the printed circuit board, outside the coil. The quality factor of the coupling coil is greater than 0.5, preferably in the range of 1 to 3. The coupling circuit typically operates without any need for a ferrite core.

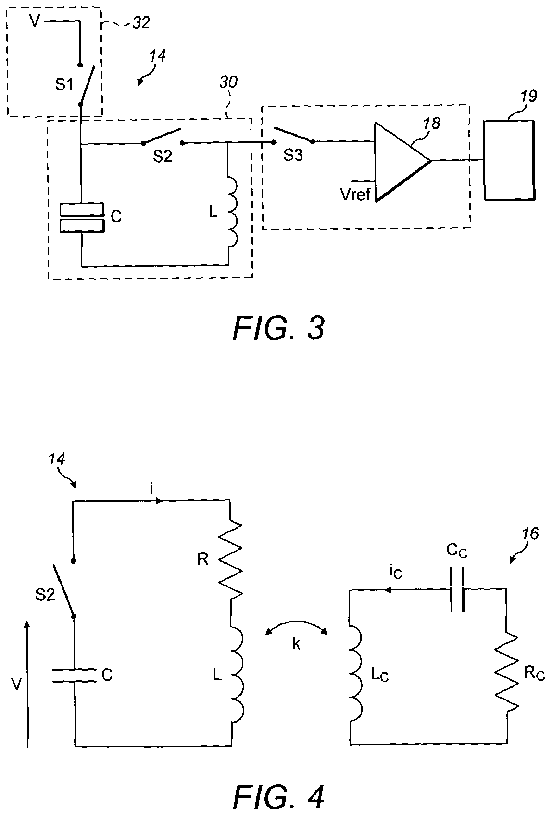

With reference to Figures 3 and 4 of the drawings, each excitation circuit 14 has an oscillating section 30 and an energising section 32. The oscillating section is in the form of an RLC circuit and includes a capacitor modelled by the circuit element C, the excitation coil 20 modelled by the circuit element L and a switch S2 for connecting the capacitor to or isolating the capacitor from the excitation coil. The RLC circuit has an inherent resistance modelled by the circuit element R (not shown in Figure 3). The energising section includes a DC power source V and a switch S1 for connecting the DC power source V to or isolating the DC power source V from the capacitor of the oscillating section.

With reference to Figure 3 of the drawings, the detection means includes a comparator 18 and a switch S3 for each excitation circuit 14. The comparator compares the value of the voltage over the excitation coil 20 (modelled by the inductor L) with a threshold voltage V_{ref}. When the switch S3 is closed, an input terminal of the comparator is connected over the inductor L. A pulse is produced at the output of the comparator for each time period during which the voltage over the excitation coil exceeds the reference voltage V_{ref}.

With reference to Figure 4 of the drawings, the coupling coil 22 of the coupling circuit 16 is modelled by the circuit element L_{C}, the capacitor 28 of the coupling circuit is modelled by the circuit element C_{C} and the internal resistance of the coupling circuit is modelled by the resistance R_{C}. The coupling between the excitation coil 20 of each excitation circuit 14 and the coupling coil of the coupling circuit when the excitation coil and the coupling coil are in register, is modelled by the coupling factor k.

In use, with reference to Figure 1, the rotatable member 12 is rotated about its axis of rotation 24 by the flow of fluid. The coupling coil 22 is thus rotated about the axis of rotation 24 of the rotatable member 12. During each full rotation of the rotatable member the coupling coil comes into register once with each of the three excitation coils 20.

In use, with reference to Figures 3 and 4, the energising section 32 of the excitation circuit 14 is operable to energise the oscillating section 30 to a predetermined degree. More particularly, the switch S1 is closed and the switch S2 is opened, the DC power source V consequently charging the capacitor C while it is isolated from the inductor L. The switch S1 is then opened and the switch S2 closed, the DC power source V consequently being isolated from the capacitor C and the flow of current between the capacitor C and the excitation coil inductor L being enabled. Thus, the capacitor C is charged with a predetermined amount of energy which is then transferred to and from the inductor L in the RLC circuit thereby causing damped oscillations in the RLC circuit. The oscillating current flowing through the excitation coil inductor L excites an oscillating electromagnetic field. When the RLC circuit is oscillating there is no energy added to it by the DC power source V. Thus, the RLC circuit is not driven while it oscillates.

After a predetermined time, the switch S2 is opened and the switch S1 is closed thereby stopping the oscillations in the LC circuit and connecting the capacitor C and the DC source V.

The charging of the capacitor C and subsequent oscillating of the RLC circuit and the electromagnetic field is repeatable at a predetermined excitation frequency. A waveform consisting of pulses at the excitation frequency of oscillations at the resonance frequency is thus observable over the excitation coil inductor L. The duty cycle of the pulses is substantially the duration of oscillation (switch S1 open; switch S2 closed) of the RLC circuit during a single cycle divided by the duration of oscillation of the RLC circuit plus the duration of charging of the capacitor (switch S1 closed; switch S2 open) during a single cycle.

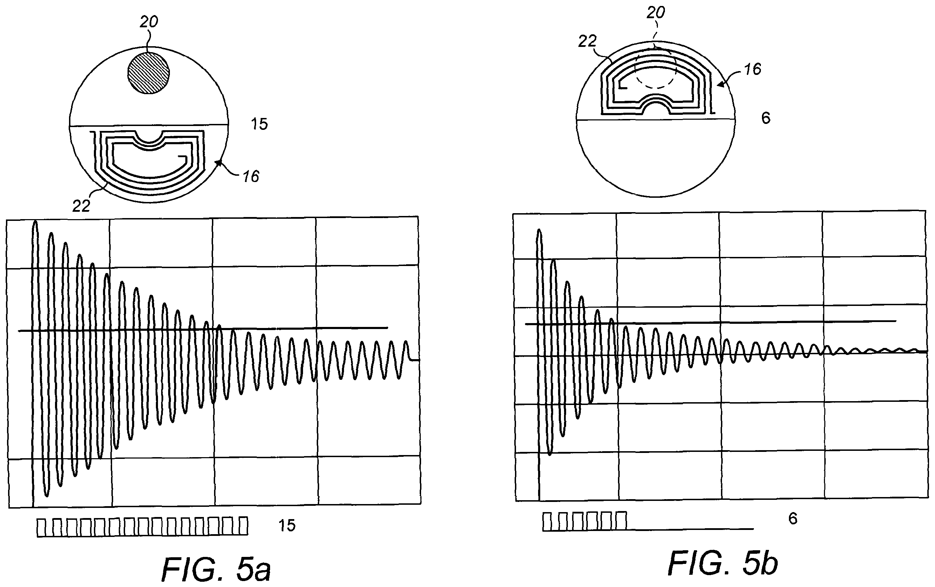

In use, with reference to Figure 5a, a pulse of oscillations over the excitation coil 20 together with the output of the comparator 18 are observed over a period during which the excitation coil 20 and the coupling coil 22 are not in register. Fifteen pulses are observed at the comparator output over said period.

With reference to Figure 5b, a pulse of oscillations over the excitation coil 20 is shown together with the output of the comparator 18 as observed over a period during which the excitation coil and the coupling coil 22 are in register. The electromagnetic field excited by the excitation circuit oscillates at a predetermined frequency which causes the coupling circuit 16 to resonate when coupled to the electromagnetic field.

More particularly, the oscillating electromagnetic field excited by the excitation coil 20 induces a current in the coupling coil 22 of which the excited electromagnetic field opposes the oscillating electromagnetic field of the excitation coil. Consequently, the damping of the oscillations observed over the excitation coil is relatively greater when the coupling coil 22 is in register with the excitation coil 20 as compared to when the coupling coil is not in register with the excitation coil. This is evidenced by the only six pulses observed at the output of the comparator over a time period corresponding to the time period observed in Figure Sa. No energy is added to the oscillating section 30 of the excitation circuit 14 while the oscillating electromagnetic field excited by the excitation coil 20 is opposed by the electromagnetic field excited by the coupling coil. The feature that the oscillating section of the excitation circuit is not driven while it oscillates thus further enables the damping of the oscillations in the excitation coil when the excitation coil is in register with the coupling coil.

An incidence of a lower pulse count at the output of the comparator 18 is thus an indicator of the coupling coil being in register with the excitation coil 20 and thus of the rotational position of the rotatable member 12 to which the coupling coil 22 is attached.

The microcontroller 19 is operable to determine the rotational position, the speed of rotation and the direction of rotation of the rotatable member 12 at a particular time from the pulses at the output of the comparators 18 of the excitation circuits 14.

Further, the microcontroller 19 is operable to determine at least one characteristic of the actuating force acting on the rotatable member 12 at a particular time from the pulses at the output of the comparators 18 of the excitation circuits 14.

As the actuating force of the rotatable member 12 is caused by the flow of fluid, the microcontroller 19 is operable to determine the rate of fluid flow, the volume of fluid flow and the direction of fluid flow from the pulses at the output of the comparators 18 of the excitation circuits 14.

The apparent resistance of an excitation coil 20 changes when the rotational member is rotated from a position in which the excitation coil is in not in register with the coupling coil 22 to a rotational position in which the excitation coil is in register with the coupling coil. The figure of merit for the design of the excitation coil is ΔR/(ω₀L) where ΔR is the change in apparent resistance of the excitation coil, ω₀ is the resonance frequency of the excitation circuit 14 and L is the inductance of the excitation coil.

The figure of merit can be optimised by manufacturing the coupling circuit 16 with particular materials in a particular configuration. For one and two layer printed circuit boards, a coupling coil 22 of 2oz copper with 0.2mm track and gap, with a 4.9 mm outer radius and a 5 mm separation from the excitation coil 20 performs sufficiently when it has at least five turns. For a single layer coupling coil 22 made of 2oz copper and having a 0.2mm track and gap, 1.5 mm inner radius and 5 mm separation, performance increases exponentially with coil size. When the copper thickness of the coupling coil is co-varied with its track and gap to maximise the amount of copper present, for 0.5 to 4 oz copper with a 0.05 to 0.4mm track and gap, a 4.9 mm coupling coil outer radius and 5mm separation from the excitation coil, a linear increase in performance is observed when the amount of copper is increased. As an alternative to a one layer or a two layer printed circuit board, a multilayer printed circuit board can be used, thereby increasing the inductance of the coupling coil. The performance of the coupling coil is not greatly affected by the thickness of the substrate used. Thinner substrates are preferred to minimise the weight of the printed circuit board thereby reducing the overall weight of the resonant damper.

For a coupling coil 22 formed of the tracks of single-sided printed circuit board, 2oz copper and 0.2mm track and gap is preferred to maximise inductance. The capacitor of the coupling circuit 16 including the coupling coil is preferably quite large, e.g. a 1206 size 1µF capacitor.

For a coupling coil 22 formed of the tracks of a double-sided printed circuit board 26, 2oz copper with 0.4mm track and 0.2mm gap is preferable. The performance of the coupling circuit 16 including the coupling coil can be increased by about 10% by using 3oz copper and 0.3 mm track and gap. A relatively small 0603 capacitor can be used with this design.

The following components may be used for the coupling coil 22 as an alternative to a printed circuit board: a flexi coil, a stamped foil coil (a laminated capacitor may be used as the capacitor 28 of the coupling circuit 16 in this instance), a copper wire formed into pancake coil or a wound component.

The excitation circuits 14 and coupling circuit 16 of the arrangement 10 are designed to operate within the frequency range 250KHz to 350KHz. The inductance L of the coupling coil 22, ranges from 0.4 micro Henrys to 0.7 micro Henrys. The size of the accompanying capacitor 28 ranges from 500nF to 1400nF. The tracks of the printed circuit board 26 are 0.3mm wide, with 0.2mm gaps and a thickness of 70µm (for 2oz copper). The printed circuit board is made of standard FR4 PCB material.

Improved damping of the oscillations in the excitation circuit 14 can be achieved by moving the excitation coils 20 and the coupling coil 22 closer together and by increasing the diameter of the printed circuit board 26.

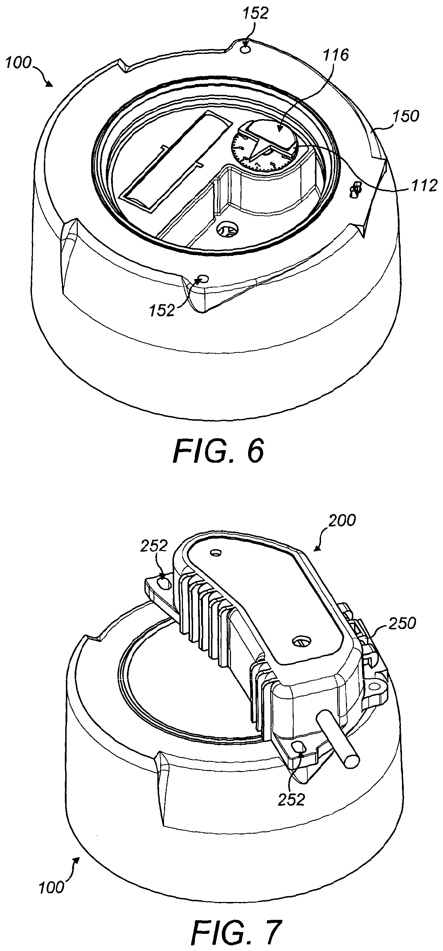

With reference to Figures 6 of the drawings, a fluid flow meter including examples of the coupling circuit 16 and the rotatable member 12 of the arrangement 10 for determining the rotational position of a rotatable member is designated, generally, by the reference numeral 100. The features of the coupling circuit 116 and the rotatable member 112 of the fluid flow meter 100 are the same as those of the coupling circuit 16 and the rotatable member 12 of the arrangement 10 and are designated by corresponding reference numerals. The coupling circuit 116 and the rotatable member 112 of the fluid flow meter 100 are in an arrangement relative to another which is the same as their arrangement relative to one another in the arrangement 10.

The rotatable member 112 includes a pointer. The pointer acts as a pointer on a dial for mechanical reading of the fluid flow meter.

With reference to Figures 7 to 9b of the drawings, a fluid flow meter peripheral device is designated, generally, by the reference numeral 200. The fluid flow meter peripheral device 200 includes examples of the excitation circuits 20 and the microcontroller 19 of the arrangement 10 for determining the rotational position of a rotatable member. The features of the excitation circuits 214 and microcontroller of the fluid flow meter peripheral device 200 are the same as those of the arrangement 10 and are designated by corresponding reference numerals.

The fluid flow meter includes attachment means in the form of a holding formation 150 and holding pin holes 152. The fluid flow meter peripheral device includes attachment means in the form of a holding formation 250 corresponding to the holding formation of the fluid flow meter peripheral device and holding pins 252.

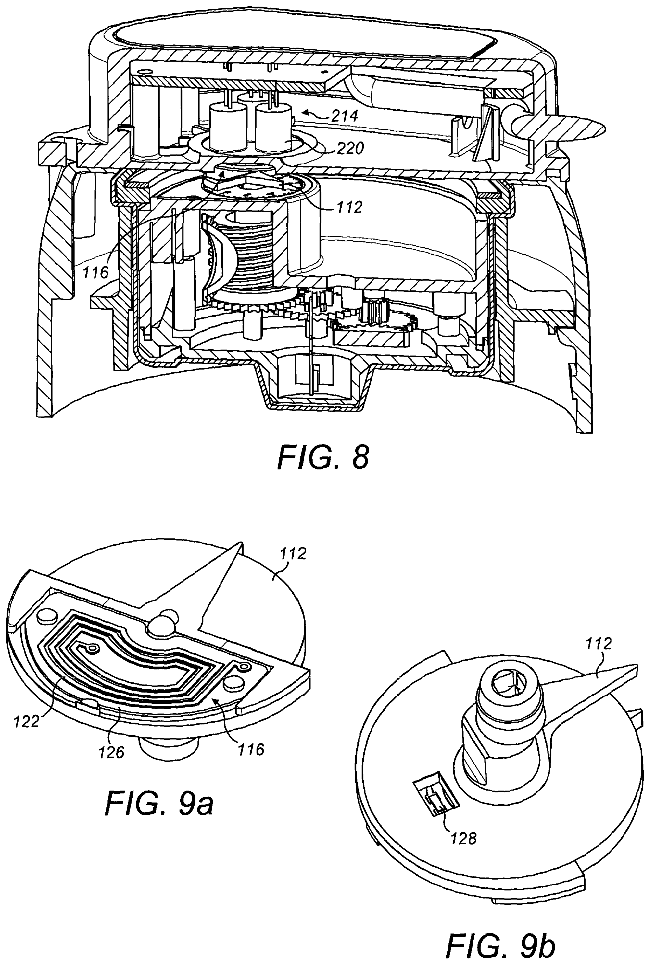

The rotatable member 112 and the coupling circuit 116 of the fluid flow meter 100 and the excitation circuits 214 and microcontroller of the fluid flow meter peripheral device 200 are in the arrangement 10 when the fluid flow meter peripheral device is attached to the fluid flow meter as shown in Figure 8.

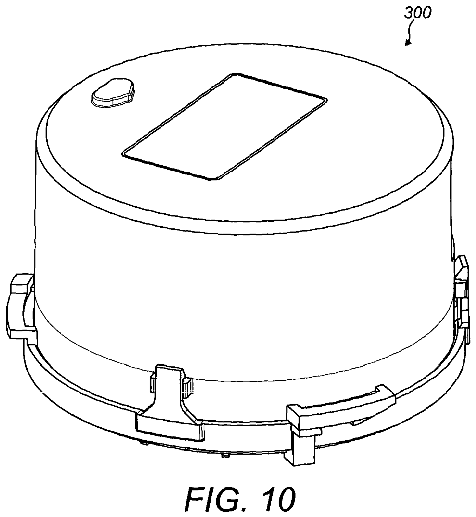

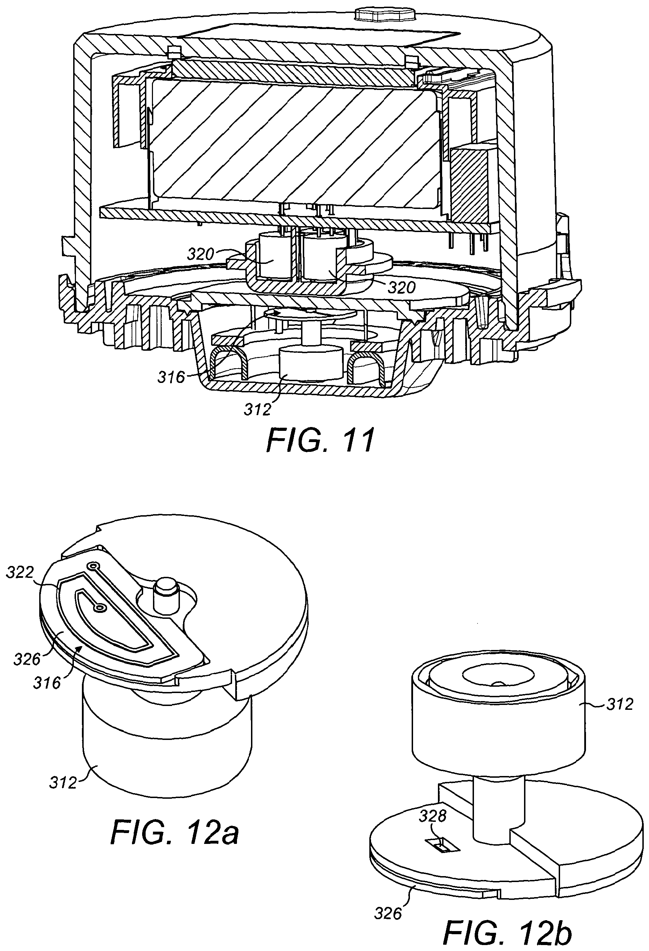

With reference to Figures 10 to 12b, a fluid flow meter including an example of the arrangement 10 is designated, generally by the reference numeral 300. The features of the arrangement in the fluid flow meter 300 are designated by reference numerals corresponding to the reference numerals of the arrangement 10. In contrast to the fluid flow meter 100, both the three excitation circuits including the excitation coils 320 and the coupling circuit 316 are included in the fluid flow meter 300.

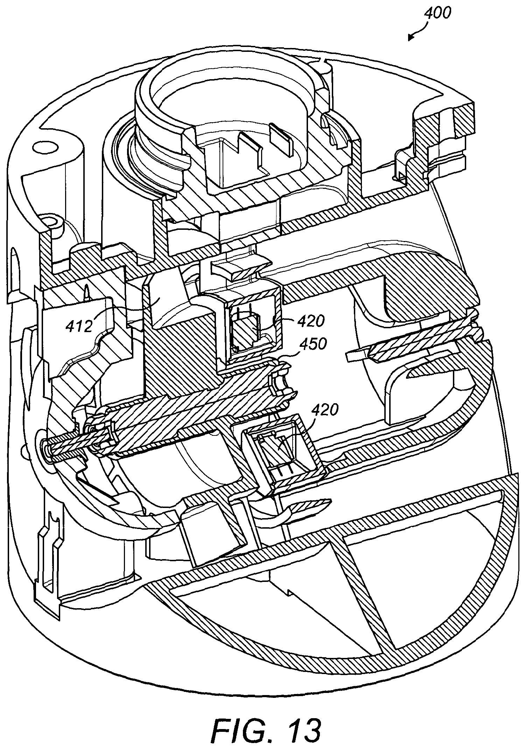

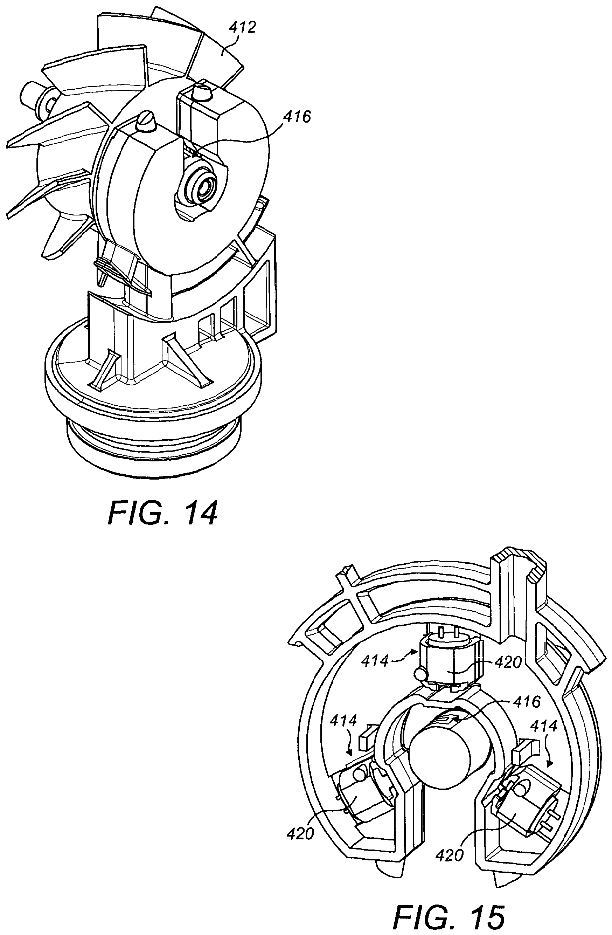

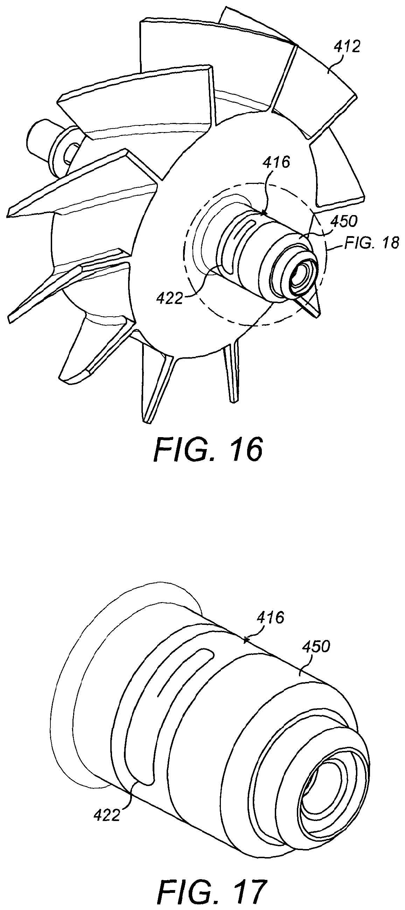

With reference to Figures 13 to 17, a fluid flow meter including another example of the arrangement 10, not according to the claims, is designated, generally, by the reference numeral 400.

The arrangement for determining the rotational position of a rotatable member in the fluid flow meter 400 differs from the arrangement 10 in that it does not include a plate element in the form of a printed circuit board 26 of which the tracks form the coupling coil 20. The rotatable member 412 includes a cylinder 450 which is substantially co-axial with the axis of rotation of the rotatable member. The coupling coil 422 is attached along a portion of the outer surface of the cylinder. Each excitation coil 420 is fixed such that it is radially disposed relative to the axis of rotation of the rotatable member 412, the centre of the excitation coil being substantially in register with the centre of the coupling coil once during a full rotation of the rotatable member. The other features of the arrangement in the fluid flow meter 400 are the same as those in the arrangement 10 and are designated by corresponding reference numerals.

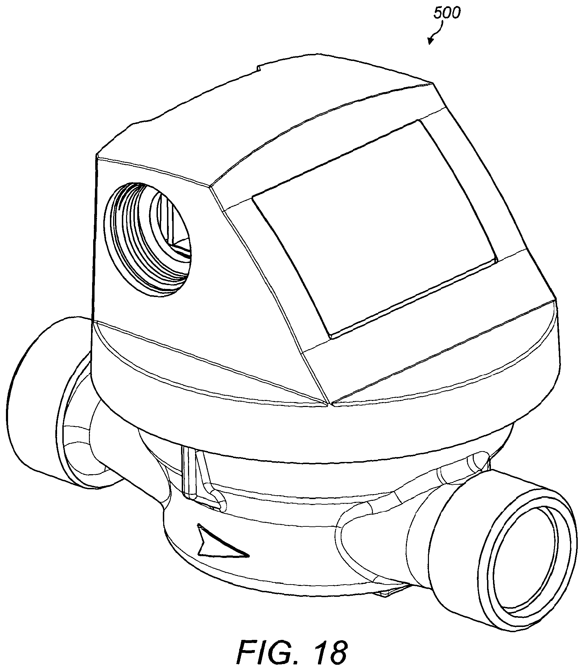

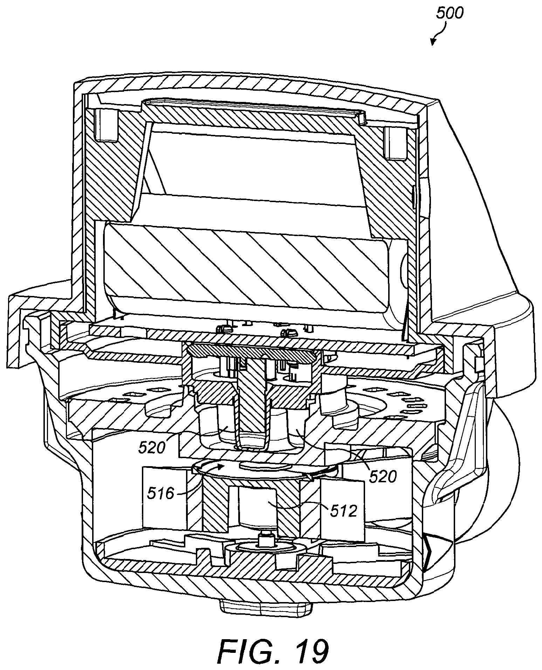

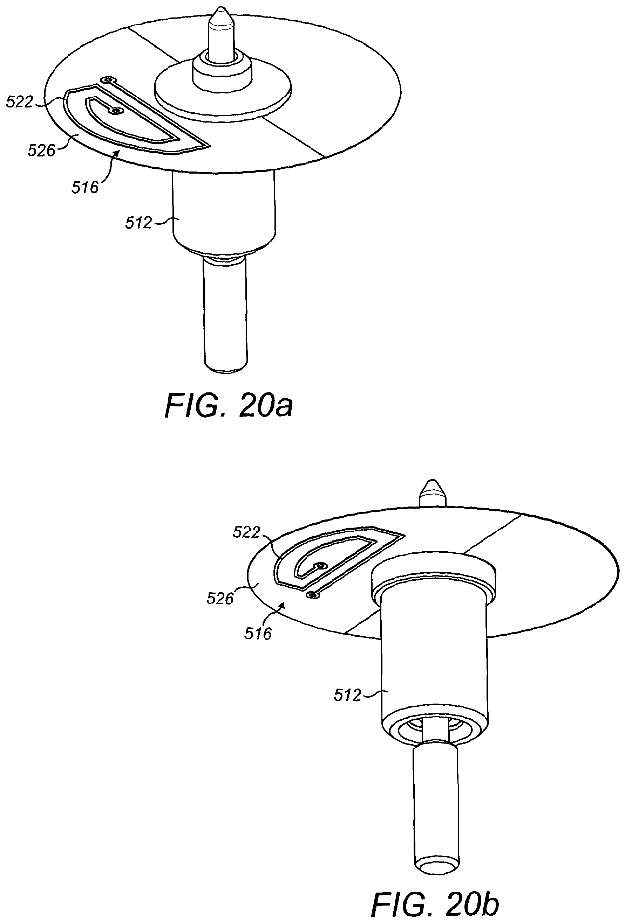

With reference to Figures 18 to 20b, a fluid flow meter including an example of the arrangement 10 is designated, generally by the reference numeral 500. The features of the arrangement in the fluid flow meter 500 are designated by reference numerals corresponding to the reference numerals of the arrangement 10. In contrast to the fluid flow meter 300, the rotatable member 512 and the coupling circuit 516 are disposed on the wet side of the fluid flow meter 500.

It is envisaged that the damping effect achievable through use of the rotational position sensing arrangement of the invention will allow for a relatively high degree of tolerance in the disposition of the elements of the arrangement relative to one another. More particularly, it is envisaged that the excitation coils and the coupling coil may be relatively far removed from one another thereby allowing for devices including the arrangement to be manufactured more cost effectively.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A rotational position sensing arrangement for sensing the rotational position of a rotatable member (12), the arrangement including:
at least one excitation circuit (14), each excitation circuit (14) having a section which includes an excitation coil (20), the excitation circuit (14) being operable to energise the section, the energy causing current to flow in the section when the section is not driven, thereby exciting an oscillating electromagnetic field;
coupling means for coupling to the electromagnetic field, the coupling means comprising a coupling circuit (16) including a coupling coil (22), and wherein the electromagnetic field excitable by each excitation circuit (14) oscillates at a predetermined frequency which causes the coupling circuit (16) to resonate when coupled to the electromagnetic field;
means for detecting a value of a parameter of the oscillations associated with each of one or more excitations in each of one or more of the excitation coils (20), wherein the parameter is a number of oscillations for which an amplitude of the oscillations associated with each of one or more excitations in each of one or more excitation coils (20) exceeds a predetermined threshold value, the means for detecting includes a comparator (18) and a switch for the or each excitation circuit (14), wherein when the switch is closed, an input terminal of the comparator (18) is connected over the excitation coil (20) and each comparator (18) produces a pulse when the value of a voltage exceeds a predetermined threshold voltage based on comparison of the voltage over the excitation coils (20) with the predetermined threshold voltage; and
a microcontroller (19) configured to determine at least one characteristic of an actuating force acting on the rotatable member (12) at a particular time from the pulses at an output of the comparators (18) of the excitation circuits (14),
wherein the rotatable member (12) includes a plate element having the coupling circuit (16) mounted thereon, the plate element is a double sided printed circuit board (26) and the coupling coil (22) is formed by tracks of the double sided printed circuit board (26); and
a capacitor (28) mounted on a central portion of the printed circuit board (26) in electrical connection with the tracks, the tracks being mounted on corresponding portions of both major sides of the printed circuit board (26) in an arrangement wherein
they surround the capacitor (28), wherein the capacitor (28) is electronically connected to the tracks on either major side of the plate element.

2. An arrangement according to claim 1, wherein the microcontroller (19) is configured to determine a speed of the rotatable member (12).

3. An arrangement according to any one of claims 1 to 2, including at least two excitation circuits (14), wherein the microcontroller (19) is configured to determine a direction of rotation of the rotatable member (12).

4. An arrangement according to any one of claims 1 to 3, wherein the actuating force is the flow of fluid, wherein the microcontroller (19) is configured to determine a rate of fluid flow, and/or wherein the microcontroller (19) is configured to determine a volume of fluid flow.

5. An arrangement according to any one of the preceding claims, wherein at least one of:
a) a quality factor of the coupling means (16) is greater than 0.5, preferably between 1 and 3;
b) resonance frequencies of the excitation means (14) and of the coupling means (16) range between 100kHz and 1MHz, preferably between 250KHz and350KHz;
c) the inductance of the coupling means (16) ranges between 0.1 micro Henrys and 2 micro Henrys, preferably between 0.4 micro Henrys and 0.7 micro Henrys, and;
d) the capacitance of the coupling means (16) ranges between 100nF and 2000nF, preferably between 500nF and 1400nF.

6. An arrangement according to any one of claims 4 to 5, wherein tracks are between 0.2mm and 0.4mm, preferably 0.3 mm wide, with between 0.1mm and 0.3 mm, preferably 0.2 mm gaps; and/or 2oz copper is used for tracks, the copper being between 50µm and 100µm, preferably 70µm thick.

7. An arrangement according to any one of claims 1 to 6, wherein the rotatable member (12) includes a pointer.

## Patentansprüche

1. Drehpositionserfassungsanordnung zum Erfassen der Drehposition eines drehbaren Bauteils (12), die Anordnung beinhaltend:
mindestens einen Erregungsschaltkreis (14), wobei jeder Erregungsschaltkreis (14) einen Abschnitt aufweist, der eine Erregungsspule (20) beinhaltet, wobei der Erregungsschaltkreis (14) dazu betriebsfähig ist, den Abschnitt mit Energie zu versorgen, wobei die Energie veranlasst, dass Strom in den Abschnitt fließt, wenn der Abschnitt nicht angetrieben wird, wodurch ein oszillierendes elektromagnetisches Feld erregt wird;
Kopplungsmittel zum Koppeln des elektromagnetischen Feldes, wobei die Kopplungsmittel einen Kopplungsschaltkreis (16) umfassen, der eine Kopplungsspule (22) beinhaltet, und wobei das durch jeden Erregungsschaltkreis (14) erregbare elektromagnetische Feld in einer vorbestimmten Frequenz oszilliert, was veranlasst, dass der Kopplungsschaltkreis (16) mitschwingt, wenn er mit dem elektromagnetischen Feld gekoppelt ist;
Mittel zum Detektieren eines Wertes eines Parameters der Oszillationen, die jeder von einer oder mehreren Erregungen in jeder von einer oder mehreren der Erregungsspulen (20) zugehörig sind, wobei der Parameter eine Anzahl von Oszillationen ist, für die eine Amplitude der Oszillationen, die jeder von einer oder mehreren Erregungen in einer oder mehreren Erregungsspulen (20) zugehörig sind, einen vorbestimmten Schwellenwert überschreitet, die Mittel zum Detektieren einen Komparator (18) und einen Schalter für den einen oder für jeden Erregungsschaltkreis (14) beinhalten, wobei, wenn der Schalter geschlossen ist, ein Eingangsanschluss des Komparators (18) über die Erregungsspule (20) verbunden ist, und jeder Komparator (18) einen Puls hervorbringt, wenn der Wert einer Spannung eine vorbestimmte Schwellenspannung überschreitet, auf Basis eines Vergleichs der Spannung über den Erregungsspulen (20) mit der vorbestimmten Schwellenspannung;
und
eine Mikrosteuerung (19), die dazu konfiguriert ist, mindestens eine Eigenschaft einer Betätigungskraft, die auf das drehbare Bauteil (12) wirkt, in einer jeweiligen Zeit ab den Pulsen an einem Ausgang des Komparators (18) der Erregungsschaltkreise (14) zu bestimmen,
wobei das drehbare Bauteil (12) ein Plattenelement beinhaltet, das den darauf montierten Kopplungsschaltkreis (16) aufweist, wobei das Plattenelement eine doppelseitige Leiterplatte (26) ist und die Kopplungsspule (22) durch Leiterbahnen der doppelseitigen Leiterplatte (26) ausgebildet ist;
und
einen Kondensator (28), der an einem zentralen Teil der Leiterplatte (26) in elektrischer Verbindung mit den Leiterbahnen montiert ist, wobei die Leiterbahnen auf entsprechenden Teilen beider Hauptseiten der Leiterplatte (26) in einer Anordnung montiert sind, wobei sie den Kondensator (28) umgeben, wobei der Kondensator (28) elektronisch mit den Leiterbahnen auf beiden Hauptseiten des Plattenelements verbunden ist.

2. Anordnung nach Anspruch 1, wobei die Mikrosteuerung (19) dazu konfiguriert ist, eine Geschwindigkeit des drehbaren Bauteils (12) zu bestimmen.

3. Anordnung nach einem der Ansprüche 1 bis 2, beinhaltend mindestens zwei Erregungsschaltkreise (14), wobei die Mikrosteuerung (19) dazu konfiguriert ist, eine Drehrichtung des drehbaren Bauteils (12) zu bestimmen.

4. Anordnung nach einem der Ansprüche 1 bis 3, wobei die Betätigungskraft der Fluidstrom ist, wobei die Mikrosteuerung (19) dazu konfiguriert ist, eine Rate des Fluidstroms zu bestimmen und/oder wobei die Mikrosteuerung (19) dazu konfiguriert ist, ein Volumen des Fluidstroms zu bestimmen.

5. Anordnung nach einem der vorhergehenden Ansprüche, wobei mindestens eines von Folgendem gilt:
a) ein Qualitätsfaktor der Kopplungsmittel (16) ist größer als 0,5, vorzugsweise zwischen 1 und 3;
b) Mitschwingfrequenzen der Erregungsmittel (14) und der Kopplungsmittel (16) liegen in einem Bereich zwischen 100 kHz und 1 MHz, vorzugsweise zwischen 250 KHz und 350 KHz;
c) die Induktivität der Kopplungsmittel (16) liegt in einem Bereich zwischen 0,1 Mikro-Henry und 2 Mikro-Henry, vorzugsweise zwischen 0,4 Mikro-Henry und 0,7 Mikro-Henry, und
d) die Kapazität der Kopplungsmittel (16) liegt in einem Bereich zwischen 100 nF und 2000 nF, vorzugsweise zwischen 500 nF und 1400 nF.

6. Anordnung nach einem der Ansprüche 4 bis 5, wobei Leiterbahnen zwischen 0,2 mm und 0,4 mm, vorzugsweise 0,3 mm breit sind, mit Spalten zwischen 0,1 mm und 0,3 mm, vorzugsweise 0,2 mm;
und/oder 2 Unzen Kupfer für Leiterbahnen verwendet werden, wobei das Kupfer zwischen 50 µm und 100 µm, vorzugsweise 70 µm dick ist.

7. Anordnung nach einem der Ansprüche 1 bis 6, wobei das drehbare Bauteil (12) einen Zeiger beinhaltet.

## Revendications

1. Agencement de détection de position de rotation pour détecter la position de rotation d'un organe rotatif (12), l'agencement incluant :
au moins un circuit d'excitation (14), chaque circuit d'excitation (14) ayant une section qui inclut une bobine d'excitation (20), le circuit d'excitation (14) étant apte à alimenter la section, l'énergie provoquant la circulation d'un courant dans la section lorsque la section n'est pas pilotée, excitant ainsi un champ électromagnétique oscillant ;
des moyens de couplage pour le couplage avec le champ électromagnétique, les moyens de couplage comprenant un circuit de couplage (16) incluant une bobine de couplage (22), et dans lesquels le champ électromagnétique excitable par chaque circuit d'excitation (14) oscille à une fréquence prédéterminée qui provoque la résonance du circuit de couplage (16) lorsqu'il est couplé au champ électromagnétique ;
des moyens de détection d'une valeur d'un paramètre des oscillations associés à chacune d'une ou plusieurs excitations dans chacune d'une ou plusieurs des bobines d'excitation (20), dans lesquels le paramètre est un nombre d'oscillations pour lesquelles une amplitude des oscillations associées à chacune d'une ou plusieurs excitations dans chacune d'une ou plusieurs bobines d'excitation (20) dépasse une valeur de seuil prédéterminée, les moyens de détection incluent un comparateur (18) et un interrupteur pour ledit ou chaque circuit d'excitation (14), dans lesquels lorsque l'interrupteur est fermé, une borne d'entrée du comparateur (18) est connectée à travers la bobine d'excitation (20) et chaque comparateur (18) produit une impulsion lorsque la valeur d'une tension dépasse une tension de seuil prédéterminée sur la base d'une comparaison de la tension au niveau des bobines d'excitation (20) avec la tension de seuil prédéterminée ;
et
un microcontrôleur (19) configuré pour déterminer au moins une caractéristique d'une force d'actionnement agissant sur l'organe rotatif (12) à un moment particulier à partir des impulsions à une sortie des comparateurs (18) des circuits d'excitation (14),
dans lequel l'organe rotatif (12) inclut un élément en plaque ayant le circuit de couplage (16) monté sur celui-ci, l'élément en plaque est une carte de circuit imprimé double face (26) et la bobine de couplage (22) est formée par des pistes de la carte de circuit imprimé double face (26) ;
et
un condensateur (28) monté sur une partie centrale de la carte de circuit imprimé (26) en connexion électrique avec les pistes, les pistes étant montées sur des parties correspondantes des deux faces principales de la carte de circuit imprimé (26) dans un agencement dans lequel elles entourent le condensateur (28), dans lequel le condensateur (28) est connecté électriquement aux pistes sur l'une ou l'autre face principale de l'élément en plaque.

2. Agencement selon la revendication 1, dans lequel le microcontrôleur (19) est configuré pour déterminer une vitesse de l'organe rotatif (12).

3. Agencement selon l'une quelconque des revendications 1 à 2, incluant au moins deux circuits d'excitation (14), dans lequel le microcontrôleur (19) est configuré pour déterminer un sens de rotation de l'organe rotatif (12).

4. Agencement selon l'une quelconque des revendications 1 à 3, dans lequel la force d'actionnement est l'écoulement de fluide, dans lequel le microcontrôleur (19) est configuré pour déterminer un débit d'écoulement de fluide, et/ou dans lequel le microcontrôleur (19) est configuré pour déterminer un volume d'écoulement de fluide.

5. Agencement selon l'une quelconque des revendications précédentes, dans lequel au moins un parmi :
a) un facteur de qualité des moyens de couplage (16) est supérieur à 0,5, de préférence entre 1 et 3 ;
b) les fréquences de résonance des moyens d'excitation (14) et des moyens de couplage (16) sont comprises entre 100 kHz et 1 MHz, de préférence entre 250 KHz et 350 KHz ;
c) l'inductance des moyens de couplage (16) est comprise entre 0,1 micro Henrys et 2 micro Henrys, de préférence entre 0,4 micro Henrys et 0,7 micro Henrys, et
d) la capacité des moyens de couplage (16) est comprise entre 100 nF et 2000 nF, de préférence entre 500 nF et 1400 nF.

6. Agencement selon l'une quelconque des revendications 4 à 5, dans lequel les pistes ont une largeur comprise entre 0,2 mm et 0,4 mm, de préférence 0,3 mm, avec des espaces compris entre 0,1 mm et 0,3 mm, de préférence 0,2 mm ;
et/ou du cuivre 2 oz est utilisé pour les pistes, le cuivre ayant une épaisseur comprise entre 50 µm et 100 µm, de préférence 70 µm.

7. Agencement selon l'une quelconque des revendications 1 à 6, dans lequel l'organe rotatif (12) inclut un pointeur.
